# FASCICULE DE BREVET EUROPEEN

(11) **EP 1 992 958 B1**
(45) Date de publication et mention de la délivrance du brevet: **05.05.2010**
(21) Numéro de dépôt: 08290445.9
(22) Date de dépôt: 13.05.2008
(51) Int. Cl.: G01S 1/00

(54) **Procédé et système de positionnement par satellites**
Verfahren und System zur Positionserfassung durch Satelliten
Method and system for satellite positioning

(30) Priorité: 18.05.2007 FR 0703562
(43) Date de publication de la demande: 19.11.2008
(73) Titulaire: Astrium SAS, 75016 Paris (FR)
(72) Inventeur: Lainé, Robert, 75015 Paris (FR); Favin-Leveque, Hugues, 78530 Buc (FR); Ripple, Martin, 78100 St Germain en Laye (FR)
(74) Mandataire: Bonnetat, Christian

(56) Documents cités:
- FR-A- 2 745 092
- US-A- 5 430 657
- US-A- 5 631 838
- US-A1- 2004 193 373
- US-B1- 6 603 426

## Description

La présente invention concerne les systèmes de positionnement terrestre par satellites.

On sait que les systèmes de positionnement par satellites comportent une constellation de satellites de navigation placés sur des orbites de moyenne altitude (de l'ordre de 25 000 km) autour de la Terre. Ces satellites de navigation et leurs orbites sont généralement désignés dans la technique par "satellites MEO" et "orbites MEO", respectivement (Medium Earth Orbit). Les satellites MEO sont répartis uniformément dans plusieurs plans orbitaux, de façon que, en tout point de la Terre, un utilisateur puisse voir plusieurs satellites MEO, c'est-à-dire se trouver en lignes directes avec ceux-ci (au moins trois, mais quatre si l'utilisateur désire connaître son altitude) et en déduire ses propres coordonnées terrestres.

Chaque satellite MEO emporte une horloge atomique de hautes stabilité et précision, ainsi qu'un équipement électronique qui adresse aux utilisateurs terrestres un message comportant l'heure corrigée (ramenée à une référence commune) et les éphémérides du satellite. A partir de ces messages reçus de plusieurs satellites MEO, l'utilisateur détermine sa distance aux divers satellites en visibilité et en déduit donc sa position en coordonnées terrestres. Pour assurer le fonctionnement nominal de la constellation de satellites MEO, un centre de contrôle terrestre effectue la mesure de l'orbite et de l'heure à bord pour chaque satellite MEO. Ce centre de contrôle calcule les éphémérides des satellites MEO et la correction de l'heure à diffuser par chaque satellite MEO pour les heures à venir.

L'inconvénient principal de ces systèmes de positionnement terrestre réside en ce que la qualité du positionnement des utilisateurs terrestres est basée sur la qualité des éphémérides et de l'heure corrigée diffusées par chaque satellite MEO. Aussi, à la suite d'une erreur du centre de contrôle ou d'une panne à bord d'un satellite MEO, il peut se produire que la position réelle, l'heure corrigée et/ou les éphémérides diffusés par un ou plusieurs satellites MEO deviennent fausses, ce qui entraîne une erreur de positionnement de tous les utilisateurs dans la zone de visibilité du satellite. L'erreur sera, à terme, détectée et corrigée par le centre de contrôle qui surveille les satellites MEO, mais, entre-temps, certains utilisateurs qui utilisent le système pour des fonctions importantes, de navigation par exemple, peuvent se trouver en situation d'insécurité grave.

On a déjà proposé plusieurs solutions pour changer la conception des satellites MEO et les asservir sur des références de temps externes afin d'augmenter la fiabilité des messages transmis par les satellites MEO. Toutefois, dans toutes ces solutions, la détection d'anomalies sur les satellites MEO est assurée par un réseau de stations de surveillance au sol, qui transmettent au centre de contrôle une information sur ces anomalies, et la correction de ces dernières est confiée audit centre de contrôle. Par ailleurs, pour être efficaces, ces solutions mettent en oeuvre au moins cinquante stations de surveillance connectées en permanence audit centre de contrôle par des canaux multiples en parallèle. Il en résulte des coûts d'installation et d'exploitation élevés.

De plus, la détection d'anomalies par un réseau de stations de surveillance terrestres entraîne une forte dilution de précision de la restitution de la position des satellites MEO. En effet, pour un satellite MEO particulier, toutes les mesures de distances sont effectuées à partir de stations terrestres qui toutes se trouvent donc localisées dans un angle solide réduit du fait que le diamètre de la Terre est petit par rapport au diamètre des orbites MEO. La précision dans le plan horizontal s'en trouve par conséquent limitée, réduisant d'autant la fiabilité de la détection instantanée des anomalies.

Par ailleurs, toutes les mesures effectuées par un tel réseau de stations de surveillance terrestres sont perturbées par les effets locaux (erreurs troposphérique, ionosphérique, multi trajet), ce qui provoque des erreurs de mesures dégradant la fiabilité de la détection des anomalies et risquent d'engendrer de fausses alertes, si l'on a fixé un seuil de tolérance serré à ces erreurs.

Un inconvénient supplémentaire de la détection d'anomalies par un réseau de stations de surveillance terrestres provient du temps de latence entre le moment où une anomalie survient sur un satellite MEO et l'instant où l'utilisateur est enfin averti de cette anomalie. En effet, la chaîne détection/notification inclut le réseau de stations mondial, le centre de contrôle, qui à partir de toutes les mesures des stations va détecter l'anomalie, les stations de diffusion vers les satellites du message d'alerte et le système de répétition du message d'alerte à bord du satellite MEO. Cette chaîne, longue et complexe, induit des temps de latence entre la survenance de l'anomalie et la notification aux utilisateurs difficilement compatibles avec les exigences de sûreté de fonctionnement les plus élevées, comme par exemple celles applicables dans le domaine aéronautique.

La présente invention a pour objet de remédier à ces inconvénients.

A cette fin, selon l'invention, le procédé pour le positionnement d'un utilisateur sur la Terre, ledit procédé mettant en oeuvre une pluralité de satellites de navigation qui sont placés sur des orbites de moyenne altitude et qui sont gérés par au moins un centre de contrôle terrestre, chacun desdits satellites de navigation émettant des premières informations d'heure et de position qui lui sont propres, est remarquable en ce que :
- on répartit dans l'espace une pluralité de balises de référence gérées par ledit centre de contrôle terrestre et aptes à émettre chacune des secondes informations d'heure et de position ainsi qu'un signal radioélectrique spécifiques ; et
- à bord de chaque satellite de navigation :
   ■ on détecte lesdites secondes informations d'heure et de position émises par au moins certaines desdites balises de référence ;
   ■ à partir desdites premières et secondes informations d'heure et de position, on calcule des premières valeurs et des deuxièmes valeurs respectivement représentatives des distances entre ledit satellite de navigation et chacune desdites balises et de la vitesse de variation de ces distances ;
   ■ on mesure la variation de fréquence doppler apparaissant dans lesdits signaux radioélectriques émis par lesdites balises de référence ;
   ■ à partir desdites variations de fréquence doppler, on calcule des troisièmes valeurs et des quatrièmes valeurs respectivement représentatives des distances entre ledit satellite de navigation et chacune desdites balises et de la vitesse de variation de ces distances ;
   ■ pour chaque balise de référence, on compare ladite première valeur de distance et ladite troisième valeur de distance, ainsi que ladite deuxième valeur de vitesse de variation de distance et ladite quatrième valeur de vitesse de variation de distance ;
   ■ on engendre un signal représentatif des résultats desdites comparaisons ; et
   ■ ledit satellite de navigation émet ce signal de résultat de comparaison en direction dudit utilisateur, au moins dans le cas où ladite comparaison révèle une anomalie.

Ainsi, grâce à la présente invention, chaque satellite de navigation MEO est en communication unidirectionnelle avec lesdites balises émettrices et peut vérifier de manière autonome que les informations essentielles qu'il transmet aux utilisateurs sont valides à chaque instant. Si la vérification est interrompue ou si elle révèle des écarts par rapport à ces informations essentielles, le satellite de navigation concerné inclut dans ces dernières un message indiquant que lesdites informations sont soit suspectes (cas dans lequel la chaîne de vérification est interrompue ou l'écart détecté est significatif mais acceptable), soit fausses. Les utilisateurs peuvent donc immédiatement soit ignorer les informations provenant du satellite de navigation correspondant, soit réduire le poids attribué à celui-ci dans le calcul de position.

Lesdites balises de référence peuvent, au moins en partie, être disposées sur la Terre ou, de préférence, à bord de satellites en orbites hautes (par exemple de l'ordre de 40.000 km). Dans ce dernier cas, il est avantageux que lesdits satellites porteurs de balises soient géosynchrones pour rester constamment en vue dudit centre de contrôle. Dans le cas où les orbites hautes ne sont pas géosynchrones, on prévoit plusieurs stations réparties autour de la terre et reliées audit centre de contrôle.

On notera que, par le document US-6 603 426, on connaît déjà un procédé pour vérifier l'intégrité des transmissions d'un système GPS. Une balise de référence située à un point fixe sur la terre dans une position connue, émet un signal RF codé qui est reçu par des satellites GPS. Le signal permet à chaque satellite de calculer la distance le séparant de la balise de référence. Les données de distance sont transmises aux autres satellites GPS par l'intermédiaire de liens. Lorsqu'un satellite GPS détermine sa position par rapport à la balise de référence, le satellite peut calculer ses propres coordonnées dans l'espace. Cette position calculée peut être comparée à d'autres données satellites de position (par exemple, basées sur données d'Ephemeris) pour vérifier l'intégrité du système GPS. S'il y a une déviation plus grande qu'une certaine erreur prédéterminée, le satellite GPS peut avoir un défaut de fonctionnement (intégrité). Dans ce cas, un message d'intégrité peut être incorporé dans le message de navigation GPS ou dans un canal séparé.

Conformément à la présente invention, un système de positionnement par satellite MEO comportant une pluralité de satellites de navigation qui sont placés sur des orbites de moyenne altitude et qui sont gérés par au moins un centre de contrôle terrestre, chacun desdits satellites de navigation comportant une horloge atomique, un récepteur-décodeur de télécommandes émises par ledit centre de contrôle terrestre, un générateur de premières informations d'heure et de position relié à ladite horloge et audit récepteur-décodeur, et un émetteur émettant lesdites premières informations en direction dudit utilisateur, est remarquable en ce que :
- ledit système comporte une pluralité de balises de référence réparties dans l'espace et gérées par ledit centre de contrôle terrestre, chaque balise étant apte à émettre des secondes informations d'heure et de position, ainsi qu'un signal radioélectrique ; et
- chaque satellite de navigation comporte de plus :
   ■ des moyens de réception desdites secondes informations émises par au moins certaines desdites balises de référence, lesdits moyens de réception mesurant la variation de fréquence doppler apparaissant dans lesdits signaux radioélectriques émis par lesdites balises de référence ;
   ■ des moyens de décodage desdites secondes informations reçues par lesdits moyens de réception ;
   ■ des moyens de calcul recevant lesdites secondes informations décodées par lesdits moyens de décodage, lesdites variations de fréquence doppler et lesdites premières informations émises par ledit générateur, lesdits moyens de calcul :
      * calculant lesdites premières, deuxièmes, troisièmes et quatrièmes valeurs à partir desdites premières et secondes informations, d'une part, et desdites variations de fréquence doppler, d'autre part ;
      * comparant, pour chaque balise de référence, ladite première valeur de distance et ladite troisième valeur de distance, ainsi que ladite deuxième valeur de vitesse de variation de distance et ladite quatrième valeur de vitesse de variation de distance ; et
      * adressant les résultats des comparaisons audit générateur pour que celui-ci les incorpore éventuellement auxdites premières informations.

La logique de décision appliquée par les moyens de calcul pour déterminer la qualité et la sécurité des données de navigation peut être la suivante :
- si tout est cohérent dans des limites prescrites prédéterminées, alors les moyens de calcul signalent ce fait au générateur de trame de navigation du satellite MEO qui incorpore dans les informations de navigation envoyées vers les utilisateurs un message signalant que les données de positionnement du satellite MEO sont bonnes,
- si la liaison avec les balises est mauvaise (pas assez de balises disponibles ou mauvais bilan de liaison), alors il y a doute sur les données et les moyens de calcul signalent ce fait au générateur de trame de navigation (les premières informations) qui incorpore dans les informations de navigation envoyées vers les utilisateurs un message signalant que la qualité des données de positionnement du satellite MEO est non validée et donc douteuse,
- enfin, si les signaux doppler reçus des balises et/ou la distance du satellite MEO à ces balises sont incohérents avec les données de navigation du satellite MEO, alors le calculateur signale ce fait au générateur de trame de navigation (les premières informations) qui incorpore dans les informations de navigation envoyées vers les utilisateurs un message d'alerte signalant que les données de positionnement du satellite MEO sont fausses.

Lesdites premières informations adressées auxdits moyens de calcul peuvent être prélevées directement à la sortie dudit générateur des premières informations. Cependant, afin de s'assurer que la qualité du signal finalement émis est bonne, on peut de plus prévoir, dans chaque satellite de navigation un récepteur-décodeur auxiliaire pour recevoir et décoder lesdites premières informations émises par ledit émetteur, ledit récepteur-décodeur auxiliaire adressant lesdites premières informations auxdits moyens de calcul.

La présente invention comporte de plus un satellite de navigation tel que décrit ci-dessus.

Les figures du dessin annexé feront bien comprendre comment l'invention peut être réalisée. Sur ces figures, des références identiques désignent des éléments semblables.

La figure 1 est une vue schématique et partielle du système de positionnement par satellites conforme à la présente invention.

La figure 2 est le schéma synoptique de l'équipement électronique d'un satellite de navigation conforme à la présente invention.

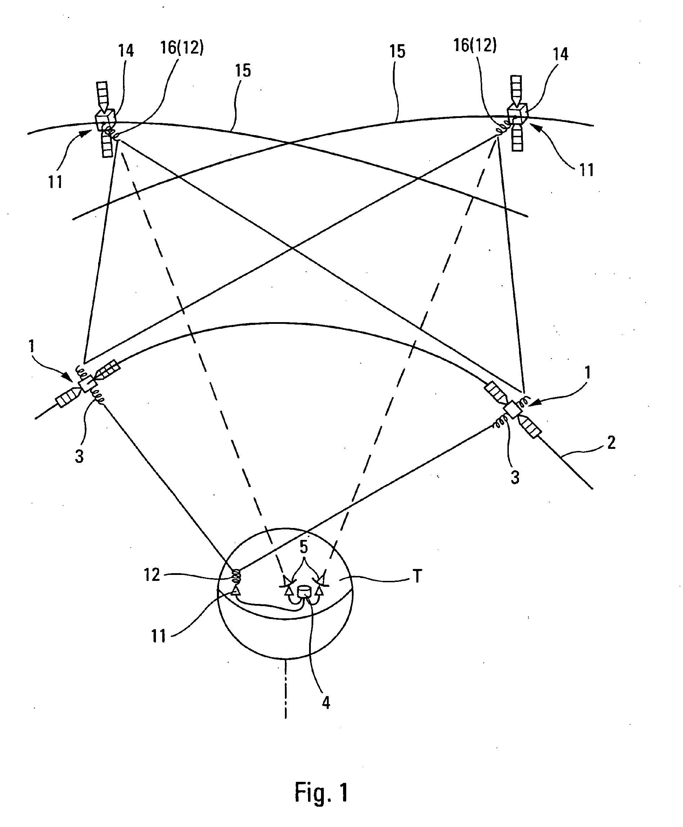

Le système de positionnement par satellites représenté schématiquement et partiellement sur la figure 1, comporte :
- des satellites de navigation 1, dits satellites MEO, décrivant des orbites de moyenne altitude 2 (orbites MEO) autour de la Terre T et équipés de systèmes d'antennes 3 ; et
- un centre de contrôle terrestre 4, équipé d'un système d'antennes 5.

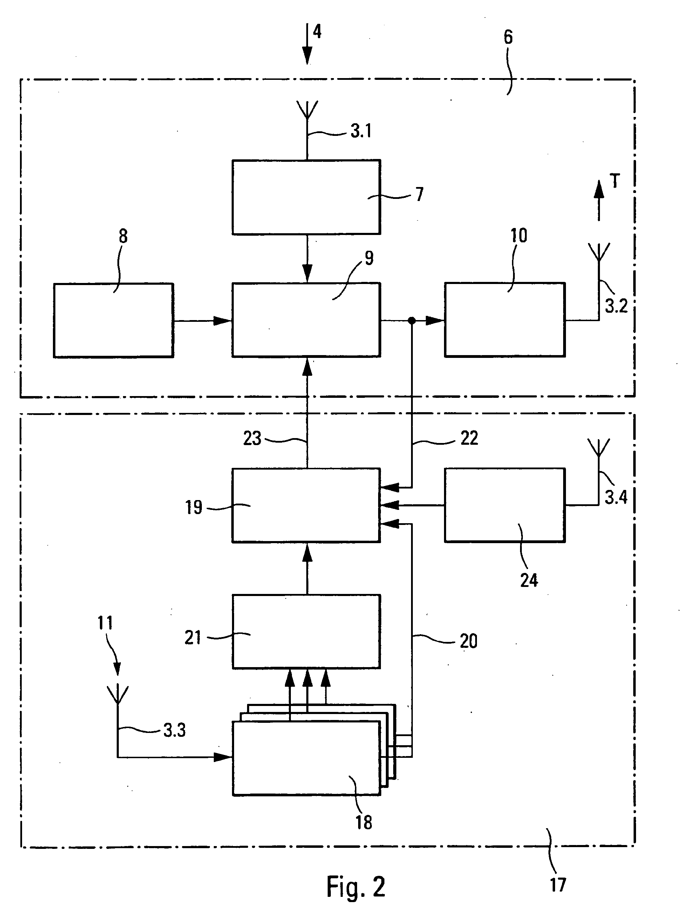

De façon connue, à bord de chaque satellite MEO 1 est embarqué un équipement électronique 6 (voir la figure 2) apte à recevoir, par la partie appropriée 3.1 du système d'antenne 3, des télécommandes émises par le centre de contrôle 4, et à émettre, par la partie appropriée 3.2 du système d'antenne 3, des signaux de positionnement en direction d'utilisateurs se trouvant sur la Terre T. De façon également connue, ledit équipement électronique 6 comporte un récepteur-décodeur des télécommandes 7 relié à la partie d'antenne 3.1, une horloge atomique 8, un générateur de trames de navigation 9 recevant les signaux du récepteur-décodeur 7 et de l'horloge 8 et un émetteur radio 10 recevant les trames de navigation (temps corrigé et éphémérides) du générateur 9 et les adressant aux utilisateurs par la partie d'antenne 3.2.

Conformément à la présente invention, le système de positionnement par satellites de la figure 1 comporte de plus des balises de référence 11, équipées d'antennes 12 pour émettre une porteuse radio avec un message comprenant leur position (en coordonnées tridimensionnelles ou sous forme d'éphémérides) et un signal de référence temporel, répété à une fréquence de récurrence supérieure au cycle de transmission des signaux émis par les satellites 1 en direction de la Terre T.

Les balises de référence 11 sont disposées soit sur la Terre T, soit à bord de satellites 14 décrivant des orbites hautes 15. Dans ce dernier cas, les antennes 12 des balises de référence 11 constituent une partie des systèmes d'antenne 16 des satellites 14.

Les signaux émis par les balises de référence 11, par l'intermédiaire des antennes 12, sont gérés et synchronisés par le centre de contrôle terrestre 4.

Conformément à l'invention, les signaux venant des balises de référence 11 sont utilisés par les satellites 1 pour valider les signaux qu'eux-mêmes transmettent aux utilisateurs terrestres.

A cette fin, comme illustré schématiquement sur la figure 2, à l'équipement électronique 6 monté à bord de chaque satellite 1 est adjoint un équipement électronique complémentaire 17 recevant les signaux des balises 11 par une partie appropriée 3.3 du système d'antenne 3 dudit satellite 1.

L'équipement électronique 17 comporte des récepteurs 18 recevant lesdits signaux des balises 11 par l'intermédiaire de ladite partie d'antenne 3.3. Les récepteurs 18 mesurent les signaux doppler des fréquences radio transmises par les diverses balises de référence 11 et adressent ces signaux doppler à un calculateur de cohérence 19 par une liaison 20. De plus, les récepteurs 18 adressent à un décodeur 21 les données reçues des balises de référence 11. Ledit décodeur 21 extrait les informations de position et d'heure reçues desdites balises de référence 11 et les adresse audit calculateur de cohérence 19.

Par ailleurs, par une liaison 22, le calculateur de cohérence 19 reçoit les trames de navigation engendrées par le générateur 9 de l'équipement électronique 6. Ainsi, le calculateur de cohérence 19 :
- calcule, pour le satellite 1 qui le porte, les distances aux diverses balises de référence 11, ainsi que la vitesse de variation de ces distances, en prenant en compte, d'une part, les informations décodées de position et d'heure de ces dernières délivrées par le décodeur 21 et, d'autre part, l'heure corrigée à bord et les éphémérides provenant dudit générateur de trames de navigation 9 ;
- vérifie que ces distances et vitesses de variation de distances calculées sont cohérentes avec les signaux doppler mesurés par les récepteurs 18;et
- transmet le résultat de cette vérification de cohérence au générateur de trames de navigation 9 par la liaison 23.

Sur la figure 2, on a représenté de plus un récepteur-décodeur de trames de navigation 24, pourvu d'une antenne de réception 3.4, faisant partie du système d'antenne 3. Le récepteur-décodeur 24 est apte à capter les trames de navigation émises par l'émetteur radio 10, par l'intermédiaire de son antenne 3.2, et à les transmettre au calculateur de cohérence 19. Le récepteur-décodeur 24 est donc apte à remplacer et/ou compléter la liaison 22.

## Revendications

1. Procédé pour le positionnement d'un utilisateur sur la Terre (T), ledit procédé mettant en oeuvre une pluralité de satellites de navigation (1) qui sont placés sur des orbites de moyenne altitude (2) et qui sont gérés par au moins un centre de contrôle terrestre (4), chacun desdits satellites de navigation (1) émettant des premières informations d'heure et de position qui lui sont propres,
**caractérisé en ce que** :
- on répartit dans l'espace une pluralité de balises de référence (11) gérées par ledit centre de contrôle terrestre (4) et aptes à émettre chacune des secondes informations d'heure et de position ainsi qu'un signal radioélectrique spécifiques ; et
- à bord de chaque satellite de navigation (1) :
• on détecte lesdites secondes informations d'heure et de position émises par au moins certaines desdites balises de référence (11) ;
• à partir desdites premières et secondes informations d'heure et de position, on calcule des premières valeurs et des deuxièmes valeurs respectivement représentatives des distances entre ledit satellite de navigation (1) et chacune desdites balises (11) et de la vitesse de variation de ces distances ;
• on mesure la variation de fréquence doppler apparaissant dans lesdits signaux radioélectriques émis par lesdites balises de référence (11) ;
• à partir desdites variations de fréquence doppler, on calcule des troisièmes valeurs et des quatrièmes valeurs respectivement représentatives des distances entre ledit satellite de navigation (1) et chacune desdites balises (11) et de la vitesse de variation de ces distances ;
• pour chaque balise de référence (11), on compare ladite première valeur de distance et ladite troisième valeur de distance, ainsi que ladite deuxième valeur de vitesse de variation de distance et ladite quatrième valeur de vitesse de variation de distance ;
• on engendre un signal représentatif des résultats desdites comparaisons ; et
• ledit satellite de navigation (1) émet ce signal de résultat de comparaison en direction dudit utilisateur, au moins dans le cas où ladite comparaison révèle une anomalie.

2. Procédé de la revendication 1,
**caractérisé en ce qu'**au moins certaines balises de référence (11) sont disposées sur la Terre (T).

3. Procédé selon l'une des revendications 1 ou 2,
**caractérisé en ce qu'**au moins certaines balises de référence (11) sont disposées à bord de satellites (14) en orbites hautes (15).

4. Procédé de la revendication 3,
**caractérisé en ce que** les satellites (14) en orbites hautes (15) sont géosynchrones.

5. Système pour la mise en oeuvre du procédé de positionnement d'un utilisateur sur la Terre (T) conformément à l'une quelconque des revendications 1 à 4, comportant une pluralité de satellites de navigation (1) qui sont placés sur des orbites de moyenne altitude (2) et qui sont gérés par au moins un centre de contrôle terrestre (4), chacun desdits satellites de navigation (1) comportant une horloge atomique (8), un récepteur-décodeur (7) de télécommandes émises par ledit centre de contrôle terrestre (4), un générateur (9) de premières informations d'heure et de position relié à ladite horloge (8) et audit récepteur-décodeur (7), et un émetteur (10) émettant lesdites premières informations en direction dudit utilisateur,
**caractérisé en ce que** :
- ledit système comporte une pluralité de balises de référence (11) réparties dans l'espace et gérées par ledit centre de contrôle terrestre (4), chaque balise (11) étant apte à émettre des secondes informations d'heure et de position, ainsi qu'un signal radioélectrique et
- chaque satellite de navigation (1) comporte de plus :
• des moyens de réception (18) desdites secondes informations émises par au moins certaines desdites balises de référence (11), lesdits moyens de réception (18) mesurant la variation de fréquence doppler apparaissant dans lesdits signaux radioélectriques émis par lesdites balises de référence (11) ;
• des moyens de décodage (21) desdites secondes informations reçues par lesdits moyens de réception (18) ;
• des moyens de calcul (19) recevant lesdites secondes informations décodées par lesdits moyens de décodage (21), lesdites variations de fréquence doppler et lesdites premières informations émises par ledit générateur (9) des premières informations, lesdits moyens de calcul (19) :
* calculant lesdites premières, deuxièmes, troisièmes et quatrièmes valeurs à partir desdites premières et secondes informations, d'une part, et desdites variations de fréquence doppler, d'autre part ;
* comparant, pour chaque balise de référence (11), ladite première valeur de distance et ladite troisième valeur de distance, ainsi que ladite deuxième valeur de vitesse de variation de distance et ladite quatrième valeur de vitesse de variation de distance ; et
* adressant les résultats des comparaisons audit générateur pour que celui-ci les incorpore éventuellement auxdites premières informations.

6. Système selon la revendication 5,
**caractérisé en ce que** lesdites premières informations adressées auxdits moyens de calcul (19) sont prélevées à la sortie dudit générateur (9) des premières informations.

7. Système selon la revendication 5,
**caractérisé en ce que** chaque satellite de navigation (1) comporte de plus un récepteur-décodeur auxiliaire (24) pour recevoir et décoder lesdites premières informations émises par ledit émetteur (10), ledit récepteur-décodeur auxiliaire (24) adressant lesdites premières informations auxdits moyens de calcul (19).

8. Satellite de navigation pour le système de positionnement de la revendication 5, ledit satellite de navigation (1) comportant une horloge atomique (8), un récepteur-décodeur (7) de télécommandes émises par un centre de contrôle terrestre (4), un générateur (9) de premières informations d'heure et de position relié à ladite horloge (8) et audit récepteur-décodeur (7), et un émetteur (10) émettant lesdites premières informations en direction dudit utilisateur, et ledit système de navigation comportant une pluralité de balises de référence (11) réparties dans l'espace et gérées par ledit centre de contrôle terrestre (4), chaque balise (11) étant apte à émettre des secondes informations d'heure et de position, ainsi qu'un signal radioélectrique,
**caractérisé en ce qu'**il comporte de plus :
- des moyens de réception (18) desdites secondes informations émises par au moins certaines desdites balises de référence (11), lesdits moyens de réception (18) mesurant la variation de fréquence doppler apparaissant dans lesdits signaux radioélectriques émis par lesdites balises de référence (11);
- des moyens de décodage (21) desdites secondes informations reçues par lesdits moyens de réception (18) ;
- des moyens de calcul (19) recevant lesdites secondes informations décodées par lesdits moyens de décodage (21), lesdites variations de fréquence doppler et lesdites premières informations émises par ledit générateur (9) des premières informations, lesdits moyens de calcul (19) :
• calculant lesdites premières, deuxièmes, troisièmes et quatrièmes valeurs à partir desdites premières et secondes informations, d'une part, et desdites variations de fréquence doppler, d'autre part ;
• comparant, pour chaque balise de référence (11), ladite première valeur de distance et ladite troisième valeur de distance, ainsi que ladite deuxième valeur de vitesse de variation de distance et ladite quatrième valeur de vitesse de variation de distance ; et
• adressant les résultats des comparaisons audit générateur pour que celui-ci les incorpore éventuellement auxdites premières informations.

9. Satellite selon la revendication 8,
**caractérisé en ce que** lesdites premières informations adressées auxdits moyens de calcul (19) sont prélevées à la sortie dudit générateur (9) des premières informations.

10. Satellite selon la revendication 8,
**caractérisé en ce qu'**il comporte de plus un récepteur-décodeur auxiliaire (24) pour recevoir et décoder lesdites premières informations émises par ledit émetteur (10), ledit récepteur-décodeur auxiliaire (24) adressant desdites premières informations auxdits moyens de calcul (19).

## Claims

1. Method for positioning a user on the Earth (T), the said method implementing a plurality of navigation satellites (1) which are placed in medium-altitude orbits (2) and which are managed by at least one terrestrial control centre (4), each of the said navigation satellites (1) transmitting first time and position information which is individual to it,
**characterized in that**:
- a plurality of reference beacons (11) managed by the said terrestrial control centre (4) and each able to transmit specific second time and position information as well as a specific radioelectric signal is distributed in space; and
- aboard each navigation satellite (1):
■ the said second time and position information transmitted is detected by at least some of the said reference beacons (11);
■ first values and second values respectively representative of the distances between the said navigation satellite (1) and each of the said beacons (11) and of the rate of variation of these distances are computed on the basis of the said first and second time and position information;
■ the variation in Doppler frequency appearing in the said radioelectric signals transmitted is measured by the said reference beacons (11);
■ third values and fourth values respectively representative of the distances between the said navigation satellite (1) and each of the said beacons (11) and of the rate of variation of these distances are computed on the basis of the said variations in Doppler frequency;
■ for each reference beacon (11), the said first distance value and the said third distance value, as well as the said second value of rate of variation of distance and the said fourth value of rate of variation of distance are compared;
■ a signal representative of the results of the said comparisons is generated; and
■ the said navigation satellite (1) transmits this comparison result signal to the said user, at least in the case where the said comparison reveals an anomaly.

2. Method of Claim 1,
**characterized in that** at least certain reference beacons (11) are disposed on the Earth (T).

3. Method according to Claim 1,
**characterized in that** at least certain reference beacons (11) are disposed aboard satellites (14) in high orbits (15).

4. Method of Claim 3,
**characterized in that** the satellites (14) in high orbits (15) are geosynchronous.

5. System for the implementation of the method of positioning a user on the Earth (T) in accordance with any one of Claims 1 to 4, comprising a plurality of navigation satellites (1) which are placed in medium-altitude orbits (2) and which are managed by at least one terrestrial control centre (4), each of the said navigation satellites (1) comprising an atomic clock (8), a receiver-decoder (7) of telecommands transmitted by the said terrestrial control centre (4), a generator (9) of first time and position information which is linked to the said clock (8) and to the said receiver-decoder (7), and a transmitter (10) transmitting the said first information to the said user,
**characterized in that**:
- the said system comprises a plurality of reference beacons (11) distributed in space and managed by the said terrestrial control centre (4), each beacon (11) being able to transmit second time and position information, as well as a radioelectric signal; and
- each navigation satellite (1) comprises moreover:
■ means (18) for receiving the said second information transmitted by at least some of the said reference beacons (11), the said reception means (18) measuring the variation in Doppler frequency appearing in the said radioelectric signals transmitted by the said reference beacons (11);
■ means (21) for decoding the said second information received by the said reception means (18);
■ computation means (19) receiving the said second information decoded by the said decoding means (21), the said variations in Doppler frequency and the said first information transmitted by the said generator (9) of the first information, the said computation means (19):
* computing the said first, second, third and fourth values on the basis of the said first and second information, on the one hand, and of the said variations in Doppler frequency, on the other hand;
* comparing, for each reference beacon (11), the said first distance value and the said third distance value, as well as the said second value of rate of variation of distance and the said fourth value of rate of variation of distance; and
* addressing the results of the comparisons to the said generator so that the latter possibly incorporates them into the said first information.

6. System according to Claim 5,
**characterized in that** the said first information addressed to the said computation means (19) is sampled at the output of the said generator (9) of the first information.

7. System according to Claim 5,
**characterized in that** each navigation satellite (1) moreover comprises an auxiliary receiver-decoder (24) for receiving and decoding the said first information transmitted by the said transmitter (10), the said auxiliary receiver-decoder (24) addressing the said first information to the said computation means (19).

8. Navigation satellite for the positioning system of Claim 5, the said navigation satellite (1) comprising an atomic clock (8), a receiver-decoder (7) of telecommands transmitted by a terrestrial control centre (4), a generator (9) of first time and position information which is linked to the said clock (8) and to the said receiver-decoder (7), and a transmitter (10) transmitting the said first information to the said user, and the said navigation system comprising a plurality of reference beacons (11) distributed in space and managed by the said terrestrial control centre (4), each beacon (11) being able to transmit second time and position information, as well as a radioelectric signal,
**characterized in that** it moreover comprises:
- means (18) for receiving the said second information transmitted by at least some of the said reference beacons (11), the said reception means (18) measuring the variation in Doppler frequency appearing in the said radioelectric signals transmitted by the said reference beacons (11);
- means (21) for decoding the said second information received by the said reception means (18);
- computation means (19) receiving the said second information decoded by the said decoding means (21), the said variations in Doppler frequency and the said first information transmitted by the said generator (9) of the first information, the said computation means (19):
■ computing the said first, second, third and fourth values on the basis of the said first and second information, on the one hand, and of the said variations in Doppler frequency, on the other hand;
■ comparing, for each reference beacon (11), the said first distance value and the said third distance value, as well as the said second value of rate of variation of distance and the said fourth value of rate of variation of distance; and
■ addressing the results of the comparisons to the said generator so that the latter possibly incorporates them into said first information.

9. Satellite according to Claim 8,
**characterized in that** the said first information addressed to the said computation means (19) is sampled at the output of the said generator (9) of the first information.

10. Satellite according to Claim 8,
**characterized in that** it moreover comprises an auxiliary receiver-decoder (24) for receiving and decoding the said first information transmitted by the said transmitter (10), the said auxiliary receiver-decoder (24) addressing the said first information to the said computation means (19).

## Patentansprüche

1. Verfahren zur Positionierung eines Benutzers auf der Erde (T), wobei das Verfahren eine Vielzahl von Navigationssatelliten einsetzt (1), die auf Umlaufbahnen mittlerer Höhe angebracht sind (2) und die von mindestens einem terrestrischen Kontrollzentrum (4) verwaltet werden, wobei jeder der Navigationssatelliten (1) erste Informationen über seine Uhrzeit und Position sendet,
**dadurch gekennzeichnet, dass**:
- im Weltraum eine Vielzahl von Referenzbaken (11) verteilt sind, die vom terrestrischen Kontrollzentrum (4) verwaltet werden und dazu geeignet sind, jeweils spezifische zweite Informationen über die Uhrzeit und die Position sowie ein spezifisches radioelektrisches Signal zu senden; und
- an Bord jedes Navigationssatelliten (1):
• die zweiten Informationen über die Uhrzeit und die Position festgestellt werden, die von mindestens bestimmten der Referenzbaken (11) gesendet werden;
• ausgehend von den ersten und den zweiten Informationen über die Uhrzeit und die Position erste bzw. zweite Werte berechnet werden, die die Abstände zwischen dem Navigationssatelliten (1) und jeder der Baken (11) und die Geschwindigkeit der Veränderung dieser Abstände darstellen;
• die Veränderung der Doppler-Frequenz berechnet wird, die in den radioelektrischen Signalen erscheint, die von den Referenzbaken (11) gesendet werden;
• ausgehend von den Veränderungen der Doppler-Frequenz dritte Werte bzw. vierte Werte berechnet werden, die die Abstände zwischen dem Navigationssatelliten (1) und jeder der Baken (11) und die Geschwindigkeit der Veränderung dieser Abstände darstellen;
• für jede Referenzbake (11) der erste Wert des Abstandes und der dritte Wert des Abstandes, ebenso wie der zweite Wert der Geschwindigkeit der Veränderung des Abstandes und der vierte Wert der Geschwindigkeit der Veränderung des Abstandes miteinander verglichen werden;
• ein Signal erzeugt wird, das die Ergebnisse der Vergleiche darstellt; und
• der Navigationssatellit (1) dieses Signal des Ergebnisses des Vergleichs in Richtung des Benutzers sendet, wenigstens für den Fall, dass der Vergleich eine Anomalie aufweist.

2. Verfahren nach Anspruch 1,
**dadurch gekennzeichnet, dass** mindestens bestimmte Referenzbaken (11) auf der Erde (T) angeordnet sind.

3. Verfahren nach einem der Ansprüche 1 oder 2,
**dadurch gekennzeichnet, dass** mindestens bestimmte Referenzbaken (11) an Bord von Satelliten (14) auf hohen Umlaufbahnen (15) angeordnet sind.

4. Verfahren nach Anspruch 3,
**dadurch gekennzeichnet, dass** die Satelliten (14) auf hohen Umlaufbahnen (15) geosynchron sind.

5. System zum Einsatz des Verfahrens zur Positionierung eines Benutzers auf der Erde (T) nach einem der Ansprüche 1 bis 4, umfassend eine Vielzahl von Navigationssatelliten (1), die auf Umlaufbahnen mittlerer Höhe (2) angebracht sind und die von mindestens einem terrestrischen Kontrollzentrum (4) verwaltet werden, wobei jeder der Navigationssatelliten (1) eine Atomuhr (8), einen Empfänger-Decoder (7) der Fernsteuerungen, die vom terrestrischen Kontrollzentrum (4) gesendet werden, einen Generator (9) erster Informationen über die Uhrzeit und die Position, der mit der Uhr (8) und mit dem Empfänger-Decoder (7) verbunden ist, und einen Sender (10), der die ersten Informationen in Richtung des Benutzers sendet, umfasst, **dadurch gekennzeichnet, dass**:
- das System eine Vielzahl von Referenzbaken (11) umfasst, die im Weltraum verteilt sind und vom terrestrischen Kontrollzentrum (4) verwaltet werden, wobei jede Bake (11) dazu geeignet ist, zweite Informationen über die Uhrzeit und die Position sowie ein radioelektrisches Signal zu senden; und
- jeder Navigationssatellit (1) außerdem Folgendes umfasst:
• Mittel zum Empfang (18) der zweiten Informationen, die von mindestens bestimmten der Referenzbaken (11) gesendet werden, wobei die Mittel zum Empfang (18) die Veränderung der Dopplerfrequenz messen, die in den radioelektrischen Signalen erscheint, die von den Referenzbaken (11) gesendet werden;
• Mittel zum Dekodieren (21) der zweiten Informationen, die von den Mitteln zum Empfang (18) erhalten werden;
• Berechnungsmittel (19), die die zweiten Informationen, die von den Mitteln zum Dekodieren (21) dekodiert werden, die Veränderungen der Dopplerfrequenz und die ersten Informationen, die vom Generator (9) der ersten Informationen gesendet werden, erhalten, wobei die Berechnungsmittel (19):
* die ersten, zweiten, dritten und vierten Werte auf der Grundlage der ersten und zweiten Informationen einerseits und der Veränderungen der Dopplerfrequenz andererseits berechnen;
* für jede Referenzbake (11) den ersten Wert des Abstandes und den dritten Wert des Abstandes miteinander vergleichen, ebenso wie den zweiten Wert der Geschwindigkeit der Veränderung des Abstandes und den vierten Wert der Geschwindigkeit der Veränderung des Abstandes; und
* die Ergebnisse der Vergleiche an den Generator richten, damit dieser sie eventuell in die ersten Informationen aufnimmt.

6. System nach Anspruch 5,
**dadurch gekennzeichnet, dass** die ersten Informationen, die an die Mittel zur Berechnung (19) gerichtet werden, am Ausgang des Generators (9) der ersten Informationen entnommen werden.

7. System nach Anspruch 5,
**dadurch gekennzeichnet, dass** jeder Navigationssatellit (1) außerdem einen zusätzlichen Empfänger-Decoder (24) umfasst, um die ersten Informationen, die vom Sender (10) gesendet werden, zu empfangen und zu dekodieren, wobei der zusätzliche Empfänger-Decoder (24) die ersten Informationen an die Berechnungsmittel (19) richtet.

8. Navigationssatellit für das System zur Positionierung von Anspruch 5, wobei der Navigationssatellit (1) eine Atomuhr (8), einen Empfänger-Decoder (7) der Fernsteuerungen, die von einem terrestrischen Kontrollzentrum (4) gesendet werden, einen Generator (9) von ersten Informationen über die Uhrzeit und die Position, der mit der Uhr (8) und mit dem Empfänger-Decoder (7) verbunden ist, und einen Sender (10), der die ersten Informationen in Richtung des Benutzers sendet umfasst, und wobei das Navigationssystem eine Vielzahl von Referenzbaken (11) umfasst, die im Weltraum verteilt sind und vom terrestrischen Kontrollzentrum (4) verwaltet werden, wobei jede Bake (11) dazu geeignet ist, zweite Informationen über die Uhrzeit und die Position sowie ein radioelektrisches Signal zu senden,
**dadurch gekennzeichnet, dass** er außerdem Folgendes umfasst:
- Mittel zum Empfang (18) der zweiten Informationen, die von mindestens bestimmten der Referenzbaken (11) gesendet werden, wobei die Mittel zum Empfang (18) die Veränderung der Dopplerfrequenz messen, die in den radioelektrischen Signalen erscheint, die von den Referenzbaken (11) gesendet werden;
- Mittel zum Dekodieren (21) der zweiten Informationen, die von den Mitteln zum Empfang (18) erhalten werden;
- Berechnungsmittel (19), die die zweiten Informationen, die von den Mitteln zum Dekodieren (21) dekodiert werden, die Veränderungen der Dopplerfrequenz und die ersten Informationen, die vom Generator (9) der ersten Informationen gesendet werden, erhalten, wobei die Berechnungsmittel (19):
• die ersten, zweiten, dritten und vierten Werte auf der Grundlage der ersten und zweiten Informationen einerseits und der Veränderungen der Dopplerfrequenz andererseits berechnen;
• für jede Referenzbake (11) den ersten Wert des Abstandes und den dritten Wert des Abstandes miteinander vergleichen, ebenso wie den zweiten Wert der Geschwindigkeit der Veränderung des Abstandes und den vierten Wert der Geschwindigkeit der Veränderung des Abstandes; und
• die Ergebnisse der Vergleiche an den Generator richten, damit dieser sie eventuell in die ersten Informationen aufnimmt.

9. Satellit nach Anspruch 8,
**dadurch gekennzeichnet, dass** die ersten Informationen, die an die Berechnungsmittel (19) gerichtet werden, am Ausgang des generators (9) der ersten Informationen entnommen werden.

10. Satellit nach Anspruch 8,
**dadurch gekennzeichnet, dass** er außerdem einen zusätzlichen Empfänger-Decoder (24) umfasst, um die ersten Informationen, die vom Sender (10) gesendet werden, zu empfangen und zu dekodieren, wobei der zusätzliche Empfänger-Decoder (24) die ersten Informationen an die Berechnungsmittel (19) richtet.
